(19) Europäisches Patentamt
European Patent Office
Office européen des brevets

(11) EP 3 555 195 B1

(12) **FASCICULE DE BREVET EUROPEEN**

(45) Date de publication et mention de la délivrance du brevet:
**29.04.2026 Bulletin 2026/18**

(21) Numéro de dépôt: **17828969.0**

(22) Date de dépôt: **19.12.2017**

(51) Classification Internationale des Brevets (IPC):
***C08L 9/00*** *(2006.01)* ***C08L 9/02*** *(2006.01)*
***C08L 21/00*** *(2006.01)*

(52) Classification Coopérative des Brevets (CPC):
(C-Sets disponibles)
**C08C 19/22; C08K 3/04;** C08K 5/548 (Cont.)

(86) Numéro de dépôt international:
**PCT/FR2017/053677**

(87) Numéro de publication internationale:
**WO 2018/115703 (28.06.2018 Gazette 2018/26)**

(54) **PROCEDE DE PREPARATION D'UN ELASTOMERE DIENIQUE MODIFIE PAR UN COMPOSE 1,3-DIPOLAIRE PAR EXTRUSION REACTIVE**

VERFAHREN ZUR HERSTELLUNG EINES MIT EINER 1,3-DIPOLAREN VERBINDUNG MODIFIZIERTEN DIENELASTOMERS MITTELS REAKTIVER EXTRUSION

METHOD FOR PRODUCING A DIENE ELASTOMER MODIFIED WITH A 1,3-DIPOLAR COMPOUND BY MEANS OF REACTIVE EXTRUSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2016 FR 1662762**

(43) Date de publication de la demande:
**23.10.2019 Bulletin 2019/43**

(73) Titulaire: **Compagnie Générale des Etablissements Michelin**
**63000 Clermont-Ferrand (FR)**

(72) Inventeur: **SAID-DIATTA, Rokhiyatou**
**63040 Clermont Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 082 704** **EP-A1- 0 109 272**
**EP-A1- 2 931 754** **EP-A1- 3 060 585**
**EP-A2- 0 033 220** **WO-A1-2013/155961**
**WO-A2-2011/083050** **US-A- 4 410 659**
**US-A1- 2009 076 212** **US-A1- 2015 322 183**
**US-B2- 9 394 434**

- **A. J. OOSTENBRINK ET AL: "The Modification of EPDM-Rubber with Maleic Anhydride by Reaction Blending", INTEGRATION OF FUNDAMENTAL POLYMER SCIENCE AND TECHNOLOGY-3, 1 January 1998 (1998-01-01), pages 123 - 127, XP055451517, ISBN: 978-94-009-1115-4, Retrieved from the Internet <URL:http://citeseerx.ist.psu.edu/viewdoc/download?doi=10.1.1.469.1878&rep=rep1&type=pdf> [retrieved on 20180215], DOI: 10.1007/978-94-009-1115-4_13**
- **OOSTENBRINK A J ET AL: "Maleic anhydride grafting on EPDM rubber in the melt", POLYMER, ELSEVIER SCIENCE PUBLISHERS B.V, GB, vol. 33, no. 14, 1 January 1992 (1992-01-01), pages 3086 - 3088, XP024115319, ISSN: 0032-3861, [retrieved on 19920101], DOI: 10.1016/0032-3861(92)90102-3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 555 195 B1

- **SHEELAKUMARI: "MODIFICATIOH OF POLYETHYLEHES BY ItEACTIVE EXTItOSIOH", 18 August 2001 (2001-08-18), XP055451505, Retrieved from the Internet <URL:http://citeseerx.ist.psu.edu/viewdoc/download?doi=10.1.1.469.1878&rep=rep1&type=pdf> [retrieved on 20180215]**

(52) Classification Coopérative des Brevets (CPC): (Cont.)

C-Sets
**C08K 3/04, C08L 15/00**

## Description

La présente invention concerne un procédé de modification d’un élastomère diénique par réaction de greffage d’un composé 1,3-dipolaire.

La modification d’élastomère diénique par un composé 1,3-dipolaire est connue. La modification a lieu par une réaction de cycloaddition [3+2] du composé 1,3-dipolaire sur les doubles liaisons des unités diéniques de l’élastomère. Très souvent, le composé 1,3-dipolaire utilisé est un composé qui outre le dipôle porte une fonction chimique, ce qui permet de greffer des fonctions chimiques pendantes sur l’élastomère. De tels élastomères modifiés peuvent être destinés pour une utilisation dans des compositions de caoutchouc pour pneumatique. Ces réactions de modification peuvent être conduites en solution ou en masse, par exemple dans un mélangeur interne comme cela est par exemple décrit dans les documents WO 2012007442, WO 2015059271, WO 2015177105. Lorsque l’élastomère modifié est destiné à être utilisé dans une composition de caoutchouc comprenant une charge renforçante et que plusieurs dizaines ou centaines de kilogrammes d’élastomère diénique sont modifiés dans un mélangeur interne par malaxage thermomécanique de l’élastomère diénique et du composé 1,3-dipolaire, la réaction de modification est suivie de l’ajout et de l’incorporation de la charge renforçante, et éventuellement des autres ingrédients de la composition. On mélange l’ensemble par un malaxage thermomécanique dans le mélangeur interne, puis on procède à la tombée du mélange chargé pour le récupérer. A la tombée, on constate que le mélange chargé tombe en poudre, ce qui rend très difficile l’utilisation du mélange chargé pour les étapes ultérieures de préparation de la composition de caoutchouc. On constate aussi que le rendement de greffage est fluctuant et peut atteindre des valeurs relativement faibles.

Les Demanderesses poursuivant leurs efforts ont trouvé un nouveau procédé en masse qui permet d’obtenir des rendements de greffage élevés et sensiblement constants dans le cas où de grosses quantités d’élastomère sont modifiées.

L’invention a donc pour objet un procédé de préparation d’un élastomère diénique modifié par un composé 1,3-dipolaire par une réaction de greffage, caractérisé en ce qu’il comprend une étape a) d’extrusion réactive d’un mélange d’un élastomère diénique et d’un composé 1,3-dipolaire dans une extrudeuse bivis comprenant un fourreau, un jeu de deux vis sans fin, une zone d’alimentation, une zone de mélangeage et une filière, la température d’extrusion étant supérieure à 100°C.

Un autre objet de l’invention est un procédé de préparation d’une composition de caoutchouc à base d’un élastomère diénique modifié par un composé 1,3-dipolaire et d’une charge renforçante qui comprend les étapes suivantes :

- une étape a) d’extrusion réactive d’un mélange d’un élastomère diénique et d’un composé 1,3-dipolaire dans une extrudeuse bivis comprenant un fourreau, un jeu de deux vis sans fin, une zone d’alimentation, une zone de mélangeage et une filière pour former un élastomère diénique modifié, la température d’extrusion étant supérieure à 100°C,
- une étape d’incorporation d’une charge renforçante à l’élastomère diénique modifié, par un malaxage thermomécanique dans un mélangeur interne.

L’invention a aussi pour objet un granulé d’élastomère diénique modifié par une réaction de greffage d’un composé 1,3-dipolaire susceptible d’être obtenu par le procédé conforme à l’invention dans lequel l’étape a) est suivie d’une étape de granulation de l’élastomère diénique modifié.

Un autre objet de l’invention est l’utilisation de granulés conformes à l’invention dans une composition de caoutchouc comprenant une charge renforçante.

## I. DESCRIPTION DETAILLEE DE L’INVENTION :

Dans la présente description, sauf indication expresse différente, tous les pourcentages (%) indiqués sont des % en masse. L’abréviation "pce" signifie parties en poids pour cent parties d’élastomère (du total des élastomères si plusieurs élastomères sont présents).

Tout intervalle de valeurs désigné par l’expression "entre a et b" représente le domaine de valeurs allant de plus de a à moins de b (c’est-à-dire bornes a et b exclues) tandis que tout intervalle de valeurs désigné par l’expression "de a à b" signifie le domaine de valeurs allant de a jusqu’à b (c’est-à-dire incluant les bornes strictes a et b).

Par l’expression composition "à base de", il faut entendre dans la présente description une composition comportant le mélange et/ou le produit de réaction in situ des différents constituants utilisés, certains de ces constituants de base (par exemple l’élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés dans la description peuvent être d’origine fossile ou biosourcés. Dans ce dernier cas,

ils peuvent être, partiellement ou totalement, issus de la biomasse ou obtenus à partir de matières premières renouvelables issues de la biomasse. Sont concernés notamment les polymères, les composés 1,3-dipolaires.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces définitions étant données, on entend plus particulièrement par élastomère diénique susceptible d'être utilisé dans les compositions conformes à l'invention :

(a) - tout homopolymère d'un monomère diène conjugué, notamment tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - tout copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - tout copolymère obtenu par copolymérisation d'un ou plusieurs diènes conjugués avec l'éthylène, une $\alpha$-monooléfine aliphatique acyclique ayant 3 à 18 atomes de carbone ou leur mélange comme par exemple ceux décrits dans le document WO 2005028526, WO 2004035639 et WO 2007054224 ;

Préférentiellement, l'élastomère diénique est choisi dans le groupe constitué par les polybutadiènes, les polyisoprènes, les copolymères de butadiène, les copolymères d'isoprène et leurs mélanges. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène et de butadiène. Plus préférentiellement, l'élastomère diénique est un polyisoprène comprenant plus de 90% en mole de liaison 1,4-cis. Peuvent convenir tout particulièrement les polyisoprènes de synthèse ayant une telle microstructure.

L'élastomère diénique contient de préférence un antioxydant. L'antioxydant peut être tout antioxydant, notamment tout antioxydant utilisé conventionnellement pour protéger les élastomères diéniques. Bien entendu, l'antioxydant peut être un mélange de plusieurs antioxydants. Par exemple, on peut citer les antioxydants appartenant à la famille des phénols, des amines, des quinones, des tocophérols, des tocotriénols, des thiols. A titre d'exemple, conviennent les dérivés de la paraphénylènediamine, encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1,4-diméthyl-pentyl)-p-phénylène-diamine, la N,N'-diaryl-p-phénylène diamine ("DTPD"), la diaryl-p-phénylène-diamine ("DAPD"), la 2,4,6-tris-(N-1,4-dimethylpentyl-p-phenylenediamino)-1,3,5-triazine, et les mélanges de telles diamines, les dérivés de la quinoléine ("TMQ") tels que par exemple la 1,2-dihydro-2,2,4-triméthylquinoléine et la 6-éthoxy-1,2-dihydro-2,2,4- triméthyl-quinoléine, les dérivés des phénols, notamment ceux du crésol, tels que le 2,2'-méthylènebis(6-tert-butyl-4-méthylphénol) connu sous le nom de « AO2246 », les copolymères de dicyclopentadiène et de para-crésol, en particulier l'antioxydant « Struktol LA229 » de Schill & Seilacher, les dérivés des diphénylamines ou triphénylamines substituées, telles que décrites par exemple dans les demandes WO 2007/121936, WO 2008/055683 et WO2009/138460, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine, la 4,4',4"-tris(1,3-diméthylbutylamino)-triphénylamine, la 4,4',4"-tris(1,4-diméthylpentylamino)-triphénylamine.

Typiquement, le taux d'antioxydant est compris entre 1 et 20 pce. La présence d'antioxydant dans l'élastomère diénique permet de minimiser, voire de limiter les évolutions de macrostructure de l'élastomère diénique qui pourraient découler du passage de l'élastomère diénique dans l'extrudeuse. Le taux maximum d'antioxydant à introduire dans l'élastomère diénique peut se justifier pour des raisons économiques, à savoir minimiser le coût lié au prix de l'antioxydant.

L'élastomère diénique peut être un élastomère étendu. On entend par élastomère étendu un élastomère auquel un plastifiant a été ajouté, notamment de façon conventionnelle par exemple dans le procédé de finition de l'élastomère diénique. A titre de plastifiant, on peut citer les huiles d'extension traditionnellement utilisées dans les compositions de caoutchouc pour pneumatique, telles que les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales.

Le terme composé 1,3-dipolaire est compris selon la définition donnée par IUPAC. Le dipôle du composé 1,3-dipolaire peut être un oxyde de nitrile, une nitrone ou un nitrile imine, de préférence est un oxyde de nitrile.

Lorsque le dipôle du composé 1,3-dipolaire est un oxyde de nitrile, le composé 1,3-dipolaire comprend de

préférence un noyau benzénique qui est substitué par le dipôle. De manière plus préférentielle, le noyau benzénique est aussi substitué en ortho du dipôle. Ces modes de réalisation préférentiels permettent d'optimiser encore davantage le rendement de greffage. En effet, la présence du noyau benzénique dans la structure du composé 1,3-dipolaire, en particulier substitué en ortho, confère une meilleure stabilité du composé 1,3-dipolaire au stockage avant sa mise en contact avec l'élastomère diénique.

Le composé 1,3-dipolaire outre le dipôle peut porter une autre fonction chimique. A titre de fonction chimique, on peut citer les groupes pouvant s'associer par liaisons hydrogène comme ceux décrits dans le document WO 2012007441, tout particulièrement les groupes contenant un hétérocycle diazoté et carbonylé à 5 membres tel que le groupe 2-oxoimidazolidin-1-yle, les groupes pouvant interagir avec la surface d'une charge renforçante usuellement utilisée dans les compositions de caoutchouc pour pneumatique tels que des groupes imidazole, ester, oxazoline, thiazoline, alcoxysilane et allylétain comme décrits respectivement dans les documents WO 2015059271, WO2015177105 et WO 2006045088.

La quantité de composé 1,3-dipolaire dans le mélange d'élastomère diénique et de composé 1,3-dipolaire, exprimée en mole pour 100 moles de motifs d'élastomère, peut varier dans une large mesure, par exemple dans une gamme comprise entre 0.01 et 50, de préférence de 0.01 à 3. Elle est indexée sur le rendement de greffage et le taux de greffage souhaité sur l'élastomère diénique qui dépend de l'application envisagée de l'élastomère diénique modifié.

Le procédé conforme à l'invention a pour caractéristique essentielle de comprendre une étape d'extrusion réactive du mélange de l'élastomère diénique et du composé 1,3-dipolaire. Cette étape est appelée étape a). L'extrudeuse utile aux besoins de l'invention est une extrudeuse bivis. De façon conventionnelle, elle comprend un fourreau, une zone d'alimentation, une zone de mélangeage, un jeu de deux vis sans fin et une filière.

L'élastomère diénique et le composé 1,3-dipolaire sont introduits dans la zone d'alimentation de l'extrudeuse, typiquement par la trémie. Tout en alimentant l'extrudeuse en élastomère diénique, on introduit simultanément le composé 1,3-dipolaire.

Alternativement, l'élastomère diénique et le composé 1,3-dipolaire sont introduits séparément dans l'extrudeuse, l'introduction de l'élastomère diénique se faisant dans la zone d'alimentation de l'extrudeuse, l'introduction du composé 1,3-dipolaire se faisant en aval de celle de l'élastomère diénique. Typiquement, on alimente l'extrudeuse en élastomère diénique par la trémie d'alimentation qui équipe de façon conventionnelle une extrudeuse. Le composé 1,3-dipolaire est introduit de préférence dans la zone de mélangeage de l'extrudeuse, conventionnellement en aval de la zone d'alimentation. Cette alternative est avantageuse, car elle permet une répartition davantage homogène du composé 1,3-dipolaire dans l'élastomère diénique. Il s'ensuit que le taux de greffage de l'élastomère diénique ne fluctue quasiment pas en sortie de filière.

Dans l'extrudeuse, l'élastomère diénique s'échauffe sous l'effet des contraintes mécaniques, notamment dans la zone de mélangeage. Un complément de chaleur, par exemple apporté par un fluide caloporteur circulant dans une double enveloppe de l'extrudeuse peut être nécessaire pour augmenter encore davantage la température d'extrusion. On appelle température d'extrusion la température de consigne appliquée à l'intérieur de l'extrudeuse, en particulier au fourreau. La température d'extrusion est supérieure à 100°C. De préférence, la température d'extrusion est comprise entre 110 et 140°C. De manière encore plus préférentielle, la température d'extrusion dans la zone allant depuis la zone de mélangeage jusqu'à l'extrémité du jeu des deux vis la plus proche de la filière est comprise entre 110 et 140°C. Une telle gamme de température permet d'obtenir le meilleur compromis entre le rendement de greffage et la productivité. La productivité est régie par le débit de l'élastomère diénique dans l'extrudeuse qui est lui-même ajusté en fonction du temps de séjour que l'on souhaite appliquer à l'élastomère diénique dans l'extrudeuse depuis la zone de mélangeage jusqu'à la filière de l'extrudeuse.

Les temps de séjour sont typiquement courts, notamment d'au plus 5 minutes, de préférence inférieurs à 5 minutes. Des temps de séjour allant de 30 secondes à 2 minutes peuvent suffire pour obtenir à la fois un bon rendement de greffage et une bonne maîtrise du taux de greffage, ce qui garantit une bonne reproductibilité du procédé. Ces performances de procédé sont réalisées sans être au détriment des propriétés de l'élastomère diénique, puisque la mise en œuvre du procédé ne s'accompagne pas de réticulation de l'élastomère diénique. Le procédé conforme à l'invention permet d'extruder sans appliquer des conditions particulières quant à l'atmosphère à l'intérieur du fourreau. Typiquement, l'extrusion a lieu sous air ambiant. A la sortie de l'extrudeuse, après passage dans la filière, on récupère l'élastomère diénique modifié. L'élastomère diénique modifié est un élastomère diénique dont les unités diéniques ont réagi par réaction de cycloaddition [3+2] avec le composé 1,3-dipolaire.

A la sortie de l'extrudeuse, l'élastomère diénique modifié est de préférence découpé en granulés selon une étape de granulation, étape bien connue de l'homme du métier. Tout dispositif connu pour découper les élastomères diéniques dans les procédés de fabrication des caoutchoucs synthétiques peut être utilisé, tel qu'un marteau ou un granulateur. Il est disposé après la filière. Pour pouvoir conserver les granulés sans qu'ils ne s'agglomèrent, on peut talquer les granulés, puis si besoin les mettre dans un conditionnement adapté pour pouvoir les transporter, les stocker ou les manipuler.

Les granulés susceptibles d'être obtenus selon le procédé conforme à l'invention peuvent être utilisés à titre d'élastomère dans une composition de caoutchouc comportant une charge renforçante.

La charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le procédé de préparation de la composition de caoutchouc a pour caractéristique essentielle de comprendre l'étape a) définie selon l'un quelconque des modes de réalisation de préparation de l'élastomère diénique modifié. Il comprend en outre une étape d'incorporation de la charge renforçante à l'élastomère diénique modifié et extrudé, de préférence sous la forme de granulés, dans un mélangeur interne. Une étape de granulation de l'élastomère diénique modifié peut suivre l'étape a) et précéder l'étape d'incorporation de la charge renforçante.

L'étape d'incorporation de la charge renforçante à l'élastomère diénique modifié et extrudé peut être réalisée de façon connue de l'homme du métier et de façon conventionnelle en réalisant un malaxage thermomécanique à haute température (phase dite « non-productive »), jusqu'à une température maximale comprise entre 110°C et 200°C, de préférence entre 130°C et 185°C. Au cours de cette phase dite « non-productive » peuvent être aussi introduits dans le mélangeur interne tous les constituants nécessaires à la composition de caoutchouc à l'exception du système de réticulation. La durée totale du malaxage, dans cette phase non-productive, est de préférence comprise entre 2 et 10 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme article semi-fini pour pneumatique, tel qu'une bande de roulement pour pneumatique.

Les caractéristiques précitées de la présente invention, ainsi que d'autres, seront mieux comprises à la lecture de la description suivante des exemples de réalisation de l'invention, donnés à titre illustratif et non limitatif.

## II. EXEMPLES DE REALISATION DE L'INVENTION

### II.1-Exemples non conformes à l'invention :

Les élastomères diéniques modifiés ainsi que les compositions de caoutchouc les contenant sont préparés selon un procédé non conforme à l'invention, mais selon le procédé suivant décrit dans l'état de la technique, en l'espèce le document WO 2012007442.

Etape 1 : On introduit 150 kg d'élastomère diénique et une quantité visée de composé 1,3-dipolaire dans un mélangeur interne dont la température initiale de cuve est d'environ 50°C. On mélange par un malaxage thermomécanique pendant 2 minutes jusqu'à une température de 120°C.

Etape 2 : Dans le mélangeur interne contenant l'élastomère diénique modifié, on introduit la charge renforçante (silice, 60 pce ; noir de carbone N234 : 3 pce), l'agent de couplage (Si69, 6 pce) puis, après une à deux minutes de malaxage, les divers autres ingrédients (antioxydant : 3 pce ; paraffine : 1 pce ; acide stéarique : 2.5 pce ; ZnO : 3 pce) à l'exception du système de vulcanisation. On conduit alors un travail thermomécanique (phase non-productive) en une étape (durée totale du malaxage égale à environ 5 min), jusqu'à atteindre une température maximale de "tombée" de 160°C. On récupère la composition de caoutchouc ainsi obtenue (composition NC1).

Le composé 1,3-dipolaire utilisé est un composé dont le dipôle est un oxyde de nitrile, en l'espèce le 2,4,6-triméthyl-3-(2-(2-oxoimidazolidin-1-yl)éthoxy)benzonitroxide. L'élastomère diénique est un polyisoprène antioxydé, grade Nipol 2200 de Nippon Zeon.

On reconduit le mode opératoire décrit ci-dessus pour fabriquer quatre autres compositions, respectivement NC2 à NC5.

### II.2-Exemples selon l'invention :

Les élastomères diéniques modifiés C1 et C2 sont préparés selon le procédé conforme à l'invention.

Conditions opératoires : température 120°C, vitesse de rotation des vis 40 tours/min, temps de séjour 2 min.

L'élastomère diénique est introduit dans l'extrudeuse par la trémie d'alimentation sous forme de bande à un débit de 1.7kg/h. Parallèlement, le composé 1,3-dipolaire est introduit manuellement par la trémie d'alimentation sous forme de poudre de sorte d'obtenir un débit moyen de 0.5g/min. L'élastomère diénique C1 modifié est récupéré en sortie de filière. On reconduit le mode opératoire décrit ci-dessus pour fabriquer un autre élastomère diénique modifié C2.

II.3-Résultats :

On définit un taux visé, un taux réel de composé 1,3-dipolaire, un taux greffé, un rendement de greffage et une efficacité du procédé.

Le taux visé est la quantité de composé 1,3-dipolaire exprimée en mole pour 100 moles d'unité isoprène qui a été pesée et introduite :

- dans le mélangeur interne à l'étape 1 pour NC1 à NC5,
- dans l'extrudeuse par la trémie d'alimentation pour C1 et à C2 ;

Le taux réel est la quantité, déterminée par analyse de résonance magnétique nucléaire (RMN), de composé 1,3-dipolaire sous la forme greffée et non greffée sur l'élastomère diénique

- à l'issue de l'étape 2 pour NC1 à NC5,
- à la sortie de la filière pour C1 et C2 ;

Le taux greffé correspond à la quantité, déterminée par analyse RMN, de composé 1,3-dipolaire sous la forme greffée sur l'élastomère diénique à l'issue de l'étape 2 pour NC1 à NC5, à la sortie de la filière pour C1 à C2.

Le rendement de greffage est le ratio entre la quantité de composé 1,3-dipolaire greffé sur l'élastomère diénique et le taux réel ;
L'efficacité du procédé est le ratio entre la quantité de composé 1,3-dipolaire greffé sur l'élastomère diénique et le taux visé.

Ces grandeurs sont déterminées par analyse RMN sur les élastomères diéniques ou sur les compositions NC1 à NC5.

Méthode d'analyse par RMN :

Les expériences RMN 1D $^1H$ utilisent une séquence simple impulsion avec un angle de basculement de 30°, le nombre de répétitions est de 128 scans avec un délai de recyclage de 5 secondes.

Les expériences RMN bidimensionnelles $^1H$ / $^{13}C$ sont des séquences de type HSQC (Heteronuclear Single Quantum Coherence) et HMBC (Heteronuclear Multiple-Bond Correlation) pour les corrélations $^1H$ / $^{13}C$ à courte ($^1J$) et longue distance ($^3J$) respectivement. Les expériences sont réalisées à 25 °C.

Deux parties du même échantillon sont analysées :

- l'une brute (issue directement de la fin de la synthèse)
- et l'autre coagulée (dépourvue de toute molécule libre, notamment de composé 1,3-dipolaire non greffé).

Les déplacements chimiques sont calibrés par rapport à l'impureté protonée du $CDCl_3$ $\delta(^1H) = 7{,}20$ ppm, référencée sur le TMS ($\delta(^1H) = 0{,}06$ ppm).

Le schéma 1 illustre les motifs des unités isoprène modifiées par le greffage du composé 1,3-dipolaire, R représentant le reste de la chaîne polyisoprène.

Les déplacements chimiques caractéristiques des protons du composé 1,3-dipolaire greffé sur la chaîne polyisoprène (IR) figurent dans le tableau 1.

Les quantifications ont été effectuées à partir de l'intégration des spectres RMN 1D $^1H$ à l'aide du logiciel d'acquisition des données.

Les massifs considérés pour la quantification sont :

- ✓ 1 proton de l'IR1-2 entre 5,8 ppm et 5,6 ppm,
- ✓ 1 proton de l'IR1-4 entre 5,4 et 4,7 ppm,
- ✓ 2 protons de l'IR3-4 entre 4,7 et 4,5 ppm,
- ✓ 8 protons du composé 1,3-dipolaire (4 $CH_2$) entre 3,9 et 3,3 ppm.

À l'aide de l'intégration du spectre RMN 1D $^1H$ de la partie brute de l'échantillon : la quantification du motif de composé 1,3-dipolaire total sous la forme greffée et non greffée peut être réalisée en % motifs comme suit :

% motif total = intégrale $^1H$ motif total x 100 / (intégrale $^1H$ motif IR1-4 + intégrale $^1H$ motif IR3-4 + intégrale $^1H$ motif IR1-2).

À l'aide de l'intégration du spectre RMN 1D $^1H$ de la partie coagulée de l'échantillon : la quantification du motif de composé 1,3-dipolaire greffé peut être réalisée en % motifs comme suit :

% motif greffé = intégrale $^1H$ motif greffé x 100 / (intégrale $^1H$ motif IR1-4 + intégrale $^1H$ motif IR3-4 + intégrale $^1H$ motif IR1-2).

Pour les analyses réalisées sur les compositions, la préparation de l'échantillon est faite dans des rotors remplis avec la composition ou l'élastomère à analyser et un solvant deutéré permettant le gonflement, en général du chloroforme deutéré ($CDCl_3$). Les quantités d'échantillon utilisées sont ajustées de façon à obtenir des spectres avec une sensibilité et une résolution suffisantes.

Pour les analyses réalisées sur les élastomères modifiés, 25 mg d'échantillon sont solubilisés dans 1 mL de chloroforme deutéré ($CDCl_3$) pour le verrouillage champ-fréquence.

Les résultats figurent dans le tableau 2.

Pour les exemples non conformes à l'invention, le taux réel est très inférieur au taux visé, ce qui traduit bien une perte de composé 1,3-dipolaire dans le procédé. Par ailleurs, les rendements de greffage varient dans une large mesure, puisqu'allant de 52% à 82%, ce qui démontre un manque de reproductibilité du procédé. On peut aussi noter que l'efficacité du procédé est faible (au plus 40%), si on calcule le rendement de greffage non pas sur la base du taux réel de composé 1,3-dipolaire, mais sur la base du taux visé.

Pour les exemples conformes à l'invention, bien que le taux réel soit inférieur au taux visé, les rendements de greffage sont constants et sont de 100%, ce qui traduit une maîtrise de la réaction de greffage dans le procédé conforme à l'invention. Par ailleurs, on note aussi une bien meilleure efficacité du procédé (d'au moins 50%). Ces performances de procédé sont obtenues sans qu'il n'y ait de réticulation de l'élastomère diénique.

L'utilisation des granulés conformes à l'invention dans une composition de caoutchouc permet d'améliorer l'efficacité et la reproductibilité du procédé de fabrication des compositions de caoutchouc à base d'élastomère diénique et de composé 1,3-dipolaire, en raison de l'absence de fluctuation du taux de greffage de l'élastomère diénique dans le procédé de modification de l'élastomère. Le taux de greffage étant non fluctuant, les changements de propriétés des compositions de caoutchouc apportés par la modification de l'élastomère sont davantage sous contrôle et donc davantage reproductibles.

Schéma 1 :

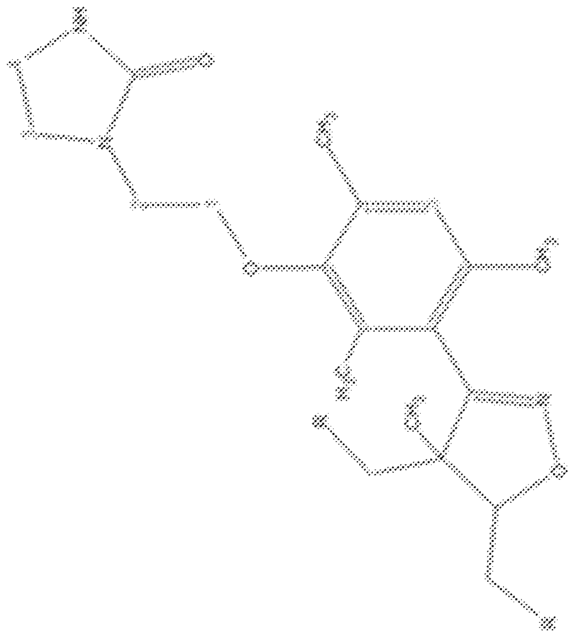

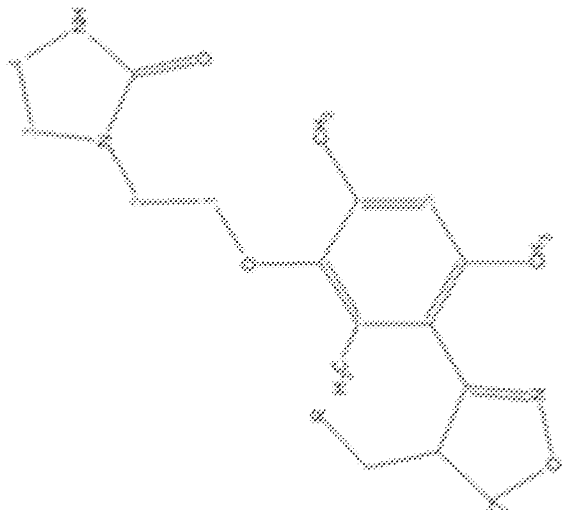

Tableau 1

| δ $^1$H (ppm) | Motif |
|---|---|
| 6,81 | CH n°5 |
| 3,39 | $CH_2$ n°4 |

(suite)

| $\delta$ $^1$H (ppm) | Motif |
|---|---|
| 3,65 | $CH_2$ n°3 |
| 3,51 | $CH_2$ n°2 |
| 3,78 | $CH_2$ n°1 |

Tableau 2

| | NC1 | NC2 | NC3 | NC4 | NC5 | C1 | C2 |
|---|---|---|---|---|---|---|---|
| Taux visé (% mol) | 0.30 | 0.30 | 0.30 | 0.30 | 0.30 | 0.40 | 0.40 |
| Taux introduit réel (%mol) | 0.17 | 0.14 | 0.16 | 0.15 | 0.08 | 0.20 | 0.22 |
| Rendement de greffage (%) | 59 | 82 | 52 | 67 | 75 | 100 | 100 |
| Efficacité du procédé (%) | 33 | 40 | 30 | 33 | 40 | 50 | 55 |

## Revendications

**1.** Procédé de préparation d'un élastomère diénique modifié par un composé 1,3-dipolaire par une réaction de greffage, **caractérisé en ce qu'**il comprend une étape a) d'extrusion réactive d'un mélange d'un élastomère diénique et d'un composé 1,3-dipolaire dans une extrudeuse bivis comprenant un fourreau, un jeu de deux vis sans fin, une zone d'alimentation, une zone de mélangeage et une filière, la température d'extrusion étant supérieure à 100°C.

**2.** Procédé selon la revendication 1 dans lequel on introduit simultanément l'élastomère diénique et le composé 1,3-dipolaire dans la zone d'alimentation de l'extrudeuse.

**3.** Procédé selon la revendication 1 dans lequel on introduit séparément l'élastomère diénique et le composé 1,3-dipolaire dans l'extrudeuse, l'introduction de l'élastomère diénique se faisant dans la zone d'alimentation de l'extrudeuse, l'introduction du composé 1,3-dipolaire se faisant en aval de celle de l'élastomère diénique.

**4.** Procédé selon la revendication 1 ou 3 dans lequel on introduit le composé 1,3-dipolaire dans la zone de mélangeage de l'extrudeuse.

**5.** Procédé selon l'une quelconque des revendications 1 à 4 dans lequel la température d'extrusion est comprise entre 110 et 140°C.

**6.** Procédé selon l'une quelconque des revendications 1 à 5 dans lequel la température d'extrusion dans la zone allant depuis la zone de mélangeage jusqu'à l'extrémité du jeu des deux vis la plus proche de la filière est comprise entre 110 et 140°C.

**7.** Procédé selon l'une quelconque des revendications 1 à 6 dans lequel le dipôle du composé 1,3-dipolaire est un oxyde de nitrile.

**8.** Procédé selon la revendication 7 dans lequel le composé 1,3-dipolaire comprend un noyau benzénique substitué par le dipôle oxyde de nitrile, le noyau benzénique étant de préférence substitué en ortho du dipôle.

**9.** Procédé selon l'une quelconque des revendications 1 à 8 dans lequel le composé 1,3-dipolaire contient un groupe contenant un hétérocycle diazoté et carbonylé à 5 membres, de préférence le groupe 2-oxoimidazolidin-1-yle.

**10.** Procédé selon l'une quelconque des revendications 1 à 9 dans lequel l'élastomère diénique est choisi dans le groupe constitué par les polybutadiènes, les polyisoprènes, les copolymères de butadiène, les copolymères d'isoprène et leurs mélanges, de préférence est un polyisoprène comprenant plus de 90% en mole de liaison 1,4-cis, de préférence de synthèse.

**11.** Procédé selon l'une quelconque des revendications 1 à 10 dans lequel l'élastomère diénique contient un antioxydant.

**12.** Procédé selon l'une quelconque des revendications 1 à 11 dans lequel l'étape a) est suivie d'une étape de granulation de l'élastomère diénique modifié à la sortie de l'extrudeuse.

**13.** Procédé de préparation d'une composition de caoutchouc à base d'un élastomère diénique modifié par un composé 1,3-dipolaire par une réaction de greffage et d'une charge renforçante qui comprend les étapes suivantes :

- une étape a) d'extrusion réactive d'un mélange d'un élastomère diénique et d'un composé 1,3-dipolaire dans une extrudeuse bivis comprenant un fourreau, un jeu de deux vis sans fin, une zone d'alimentation, une zone de mélangeage et une filière pour former un élastomère diénique modifié, la température d'extrusion étant supérieure à 100°C,
- une étape d'incorporation d'une charge renforçante à l'élastomère diénique modifié par un malaxage thermomécanique dans un mélangeur interne,

de préférence une étape de granulation de l'élastomère diénique modifié suit l'étape a) et précède l'étape d'incorporation de la charge renforçante.

**14.** Granulé d'élastomère diénique modifié par une réaction de greffage d'un composé 1,3-dipolaire susceptible d'être obtenu par le procédé défini selon la revendication 12.

**15.** Utilisation de granulés selon la revendication 14 dans une composition de caoutchouc comprenant une charge renforçante.

## Patentansprüche

**1.** Verfahren zur Herstellung eines mit einer 1,3-dipolaren Verbindung modifizierten Dienelastomers durch eine Pfropfreaktion, **dadurch gekennzeichnet, dass** es einen Schritt a) einer reaktiven Extrusion einer Mischung aus einem Dienelastomer und einer 1,3-dipolaren Verbindung in einem Doppelschneckenextruder umfasst, der eine Zylinderbuchse, einen Satz von zwei Endlosschnecken, eine Beschickungszone, eine Mischzone und eine Düse umfasst, wobei die Extrusionstemperatur höher als 100 °C ist.

**2.** Verfahren nach Anspruch 1, wobei das Dienelastomer und die 1,3-dipolare Verbindung gleichzeitig in die Beschickungszone des Extruders eingeführt werden.

**3.** Verfahren nach Anspruch 1, wobei das Dienelastomer und die 1,3-dipolare Verbindung getrennt in den Extruder eingeführt werden, die Einführung des Dienelastomers in der Beschickungszone des Extruders erfolgt, die Einführung der 1,3-dipolaren Verbindung stromabwärts von derjenigen des Dienelastomers erfolgt.

**4.** Verfahren nach Anspruch 1 oder 3, wobei die 1,3-dipolare Verbindung in der Mischzone des Extruders eingeführt wird.

**5.** Verfahren nach einem der Ansprüche 1 bis 4, wobei die Extrusionstemperatur zwischen 110 und 140 °C beträgt.

**6.** Verfahren nach einem der Ansprüche 1 bis 5, wobei die Extrusionstemperatur in der Zone, die von der Mischzone bis zu demjenigen Ende des Satzes der beiden Schnecken reicht, das der Düse am nächsten liegt, zwischen 110 und 140 °C beträgt.

**7.** Verfahren nach einem der Ansprüche 1 bis 6, wobei es sich beim Dipol der 1,3-dipolaren Verbindung um ein Nitriloxid handelt.

**8.** Verfahren nach Anspruch 7, wobei die 1,3-dipolare Verbindung einen Benzolring umfasst, der durch den Nitriloxid-Dipol substituiert ist, wobei der Benzolring vorzugsweise in der ortho-Position zum Dipol substituiert ist.

**9.** Verfahren nach einem der Ansprüche 1 bis 8, wobei die 1,3-dipolare Verbindung eine Gruppe enthält, die einen diazotierten und carbonylierten 5-gliedrigen Heterocyclus, vorzugsweise die 2-Oxoimidazolidin-1-yl-Gruppe, enthält.

**10.** Verfahren nach einem der Ansprüche 1 bis 9, wobei das Dienelastomer ausgewählt ist aus der Gruppe bestehend aus Polybutadienen, Polyisoprenen, Butadien-Copolymeren, Isopren-Copolymeren und Mischungen davon, vorzugsweise ein Polyisopren, das mehr als 90 Mol-% einer 1,4-cis-Bindung umfasst, vorzugsweise ein Synthese-Polyisopren ist.

**11.** Verfahren nach einem der Ansprüche 1 bis 10, wobei das Dienelastomer ein Antioxidans enthält.

**12.** Verfahren nach einem der Ansprüche 1 bis 11, wobei Schritt a) ein Schritt eines Granulierens des modifizierten Dienelastomers am Auslass des Extruders folgt.

**13.** Verfahren zur Herstellung einer Kautschukzusammensetzung auf der Basis eines Dienelastomers, das durch eine Pfropfreaktion mit einer 1,3-dipolaren Verbindung modifiziert ist, und eines verstärkenden Füllstoffs, das die folgenden Schritte umfasst:

- einen Schritt a) einer reaktiven Extrusion einer Mischung aus einem Dienelastomer und einer 1,3-dipolaren Verbindung in einem Doppelschneckenextruder, der eine Zylinderbuchse, einen Satz von zwei Endlosschnecken, eine Beschickungszone, eine Mischzone und eine Düse umfasst, wodurch ein modifiziertes Dienelastomer gebildet wird, wobei die Extrusionstemperatur höher als 100 °C ist,
- einen Schritt eines Einarbeitens eines verstärkenden Füllstoffs in das modifizierte Dienelastomer durch ein thermomechanisches Kneten in einem Innenmischer,

vorzugsweise einen Schritt eines Granulierens des modifizierten Dienelastomers, der Schritt a) folgt und dem Schritt des Einarbeitens des verstärkenden Füllstoffs vorausgeht.

**14.** Granulat eines Dienelastomers, das durch eine Pfropfreaktion einer 1,3-dipolaren Verbindung modifiziert ist, die durch das Verfahren gemäß der Definition in Anspruch 12 erhältlich ist.

**15.** Verwendung des Granulats nach Anspruch 14 in einer Kautschukzusammensetzung, die einen verstärkenden Füllstoff umfasst.

## Claims

**1.** Process for the preparation of a diene elastomer modified by a 1,3-dipolar compound by a grafting reaction, **characterized in that** it comprises a stage a) of reactive extrusion of a mixture of a diene elastomer and of a 1,3-dipolar compound in a twin-screw extruder comprising a barrel, a set of two endless screws, a feed zone, a compounding zone and a die, the extrusion temperature being greater than 100°C.

**2.** Process according to Claim 1, in which the diene elastomer and the 1,3-dipolar compound are introduced simultaneously into the feed zone of the extruder.

**3.** Process according to Claim 1, in which the diene elastomer and the 1,3-dipolar compound are introduced separately into the extruder, the introduction of the diene elastomer being carried out in the feed zone of the extruder, the introduction of the 1,3-dipolar compound being carried out downstream of the introduction of the diene elastomer.

**4.** Process according to Claim 1 or 3, in which the 1,3-dipolar compound is introduced into the compounding zone of the extruder.

**5.** Process according to any one of Claims 1 to 4, in which the extrusion temperature is between 110 and 140°C.

**6.** Process according to any one of Claims 1 to 5, in which the extrusion temperature in the zone ranging from the compounding zone up to the end of the set of the two screws closest to the die is between 110 and 140°C.

**7.** Process according to any one of Claims 1 to 6, in which the dipole of the 1,3-dipolar compound is a nitrile oxide.

**8.** Process according to Claim 7, in which the 1,3-dipolar compound comprises a benzene ring substituted by the nitrile oxide dipole, the benzene ring being preferably substituted in the position ortho to the dipole.

**9.** Process according to any one of Claims 1 to 8, in which the 1,3-dipolar compound contains a group containing a 5-membered dinitrogenous and carbonylated heterocycle, preferably the 2-oxoimidazolidin-1-yl group.

**10.** Process according to any one of Claims 1 to 9, in which the diene elastomer is selected from the group consisting of polybutadienes, polyisoprenes, butadiene copolymers, isoprene copolymers and their mixtures, preferably is a polyisoprene comprising more than 90 mol% of cis-1,4 bonding, preferably a synthetic polyisoprene.

**11.** Process according to any one of Claims 1 to 10, in which the diene elastomer contains an antioxidant.

**12.** Process according to any one of Claims 1 to 11, in which stage a) is followed by a stage of granulation of the modified diene elastomer at the outlet of the extruder.

**13.** Process for the preparation of a rubber composition based on a diene elastomer modified by a 1,3-dipolar compound by a grafting reaction and on a reinforcing filler which comprises the following stages:

- a stage a) of reactive extrusion of a mixture of a diene elastomer and of a 1,3-dipolar compound in a twin-screw extruder comprising a barrel, a set of two endless screws, a feed zone, a compounding zone and a die in order to form a modified diene elastomer, the extrusion temperature being greater than 100°C,
- a stage of incorporation of a reinforcing filler in the modified diene elastomer by thermomechanical kneading in an internal mixer,

preferably a stage of granulation of the modified diene elastomer follows stage a) and precedes the stage of incorporation of the reinforcing filler.

**14.** Granule of diene elastomer modified by a reaction of grafting a 1,3-dipolar compound capable of being obtained by the process defined according to Claim 12.

**15.** Use of granules according to Claim 14 in a rubber composition comprising a reinforcing filler.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012007442 A
- WO 2015059271 A
- WO 2015177105 A
- WO 2005028526 A
- WO 2004035639 A
- WO 2007054224 A
- WO 2007121936 A
- WO 2008055683 A
- WO 2009138460 A
- WO 2012007441 A
- WO 2006045088 A